(19) Europäisches Patentamt / European Patent Office / Office européen des brevets

(11) **EP 3 418 512 B1**

(12) **EUROPEAN PATENT SPECIFICATION**

(45) Date of publication and mention of the grant of the patent:
**02.12.2020 Bulletin 2020/49**

(21) Application number: **18756724.3**

(22) Date of filing: **09.02.2018**

(51) Int Cl.:
*F01K 23/10* (2006.01)    *F01D 17/00* (2006.01)
*F01D 17/04* (2006.01)    *F01D 17/10* (2006.01)
*F01N 5/02* (2006.01)     *F01N 5/04* (2006.01)
*F02C 3/10* (2006.01)     *F02C 6/18* (2006.01)
*F02G 5/02* (2006.01)     *F01D 15/10* (2006.01)
*F01K 23/06* (2006.01)    *F01K 23/16* (2006.01)

(86) International application number:
**PCT/JP2018/004638**

(87) International publication number:
**WO 2018/155239 (30.08.2018 Gazette 2018/35)**

## (54) POWER GENERATION SYSTEM AND POWER GENERATION SYSTEM CONTROL METHOD

STROMERZEUGUNGSSYSTEM UND STROMERZEUGUNGSSYSTEMSTEUERUNGSVERFAHREN

SYSTÈME DE PRODUCTION D'ÉNERGIE ET PROCÉDÉ DE COMMANDE DE SYSTÈME DE PRODUCTION D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.02.2017 JP 2017032205**

(43) Date of publication of application:
**26.12.2018 Bulletin 2018/52**

(60) Divisional application:
**19201896.8 / 3 617 463**

(73) Proprietor: **Mitsubishi Heavy Industries Marine Machinery
& Equipment Co., Ltd.
Nagasaki-shi
Nagasaki 8508610 (JP)**

(72) Inventors:
• **KANABOSHI, Takayuki**
  **Nagasaki-shi**
  **Nagasaki 850-8610 (JP)**
• **NOGUCHI, Takayuki**
  **Nagasaki-shi**
  **Nagasaki 850-8610 (JP)**

(74) Representative: **Hoffmann Eitle
Patent- und Rechtsanwälte PartmbB
Arabellastraße 30
81925 München (DE)**

(56) References cited:
EP-A1- 2 484 873       EP-A1- 2 620 605
EP-A1- 2 963 253       DE-A1-102012 207 322
JP-A- S60 259 802      JP-A- S63 186 916
JP-A- 2015 161 243

**Description**

Technical Field

The present invention relates to an electricity generation system and an electricity generation system control method.

Background Art

There is an electricity generation system in which power is backed up by, e.g., joining a power turbine to a steam turbine that drives a generator or adding induction steam from an external power source. A method in which the steam turbine in such electricity generation system is equipped with a governor to adjust a main steam flow rate is known. In this electricity generation system, a change occurs in power turbine output or induction steam flow rate. If this change is an instant variation, the governor operates to adjust the steam turbine output so as to absorb the amount of the change.

In the electricity generation system, steam generated by an exhaust heat collection system may be used for the steam turbine. In this case, it is most efficient to supply all of generated steam to the steam turbine without releasing the generated steam to the atmosphere (hereinafter referred to as "dumping") and collect the generated steam as a generator output. However, when the generator operates in a self-sustained manner or operates in parallel with a diesel generator having a minimum output for stable operation (hereinafter referred to as "diesel generator minimum output"), the electricity generation system inevitably adjusts its output by increasing or decreasing the steam turbine output in response to an increase or decrease in electricity demand. In some cases, dumped steam may be generated depending on the turbine output decrease and the electricity generation system may fail to effectively utilize exhaust heat.

Also, a change may occur in power turbine output or induction steam flow rate. In this case, if an amount of increase or decrease to be adjusted by a steam turbine output increase or decrease falls beyond a load capacity range for a fluid, which is controlled by the governor of the steam turbine, there is a risk of occurrence of an overspeed. Therefore, in general, a lower limit is provided to each of a valve opening degree of a steam turbine speed governing valve the governor operates or the steam turbine output as a safety. Then, forcibly stopping the power turbine or shutting off the induction steam allows the governor to remain within the control range and prevents occurrence of an overspeed.

However, when the generator in the aforementioned electricity generation system operates in a self-sustained manner or when there is a load limitation such as a state in which a diesel generator operates with a minimum output when the generator operates in parallel with the diesel generator, the power turbine output or the induction steam flow rate may increase or the electricity demand may decrease. In this case, the steam turbine output largely decreases. Furthermore, if the steam turbine output falls beyond the range of control by the governor, the safety is activated for overspeed prevention to forcibly stop the power turbine or shut off the induction steam. Consequently, if there is instability of electricity generation such as a decrease in output or the steam turbine has no output (steam generation amount) sufficient to cover the load, stoppage of some loads or a blackout may occur. Also, a situation in which a power turbine repeats automatic start and stop or a situation in which supply and shut-off of induction steam is repeated may occur.

Therefore, a method in which in order to perform adjustment of an output of a power turbine in addition to adjustment of a steam turbine output by a governor, adjustment of a power turbine output is performed by a governor for a power turbine and load sharing between the steam turbine and the power turbine is controlled is known.

For example, Patent Citation 1 discloses that a governor section for a power turbine and a governor section for a steam turbine each having a speed droop control function are independently provided respectively, an exhaust gas amount adjustment valve is controlled by a control signal from the governor section for a power turbine and a steam amount adjustment valve is controlled by a control signal from the governor section for a steam turbine.

Also, Patent Citation 2 discloses that respective load factors of a steam turbine, a power turbine and a diesel engine generator are calculated and a total possible output is calculated and then respective target outputs of the steam turbine, the power turbine and the diesel engine generator are calculated and based on the respective target outputs, respective control instructions are provided to a governor section for the steam turbine, a governor section for the power turbine and a governor section for the diesel engine generator.

Patent Citation 1: Japanese Unexamined Patent Application, Publication No. 2011-27053
Patent Citation 2: Japanese Unexamined Patent Application, Publication No. 2011-74866

EP 2 963 253 A1 relates to a power generation system and a method for controlling power generation system. According to this document, a power generation system and a control method of a power generation system that control output sharing for stable operation due to a change of generated power are provided. The power generation system includes a power turbine that is driven by exhaust gas generated by an engine, a steam turbine that is driven by steam generated by the exhaust gas of the engine, a turbine generator that is connected to the power turbine and the steam turbine, a TPC that controls an output of the steam turbine, and a PMS that controls load sharing of an output of the power turbine and the output of the steam turbine. Here, when the power turbine is started, an increase instruction request for increasing an available power of the turbine generator is performed.

Disclosure of Invention

However, in the inventions disclosed in Patent Citation 1 and Patent Citation 2 above, a governor is provided in each of both a steam turbine and a power turbine, which causes the problem of complication of control compared to common control. Also, the provision of the governor in the power turbine causes the problem of a need for facility costs.

The present invention has been made in view of such circumstances, and an object of the present invention is to provide an electricity generation system and an electricity generation system control method that enables achievement of an optimum energy efficiency via load sharing control without provision of a governor for a power turbine.

In order to achieve the aforementioned object, an electricity generation system and an electricity generation system control method according to the present disclosure employ the following solutions.

An electricity generation system according to a first aspect of the present disclosure includes: a power turbine to be driven by exhaust gas generated in a main engine; a steam turbine to be driven by steam generated by the exhaust gas from the main engine; a power turbine control valve that controls an amount of the exhaust gas to be introduced to the power turbine; a steam turbine speed governing valve that adjusts an amount of steam to be supplied to the steam turbine; a load sharing control section that controls load sharing between an output of the power turbine and an output of the steam turbine and sets a target output for the steam turbine; and a turbine control section including a governor that performs governor control of the steam turbine speed governing valve based on the target output of the steam turbine, and the turbine control section calculates a target output for the power turbine based on the target output of the steam turbine and a load capacity of the steam turbine, and when an electricity demand varies, a speed of operation of the power turbine control valve is multiplied by a gain set based on a deviation of an actual output of the power turbine from the target output of the power turbine.

According to the present aspect, a target output of a power turbine is calculated based on a target output of a steam turbine and a load capacity of the steam turbine, and when an electricity demand varies, a speed of operation of a power turbine control valve is multiplied by a gain set based on a deviation of an actual output of the power turbine from the target output of the power turbine, and thus, load sharing control that enables provision of an optimum energy efficiency can be performed without a governor being provided for the power turbine control valve, and control that is simpler than that in the case where a governor is provided can be performed.

For example, if a needed load, that is, an electricity demand is decreased, load sharing can be controlled so that a decrease in load share of the steam turbine is suppressed and the power turbine assumes the decrease. A decrease in output due to the decrease in electricity demand is absorbed by an output of the power turbine without being absorbed by an output of the steam turbine, and thus, the output of the steam turbine does not decrease and generation of dumped steam can thus be avoided. The present aspect enables effective utilization of exhaust gas and thus enables efficient power generation.

Also, no governor is provided for the power turbine control valve, enabling facility costs to be kept low.

Also, in the steam turbine speed governing valve, generally, a lower limit value is provided for an opening degree of a valve operated by a governor section or a steam turbine output as a safety. This is because when an output decrease due to an electricity demand decrease falls beyond the load capacity of the steam turbine, an overspeed may be made to occur. If the output of the steam turbine falls below the lower limit, stop of the power turbine or shut-off of the induction steam are forcibly performed. Consequently, instability of electricity generation such as a decrease in output, or if the load capacity of the steam turbine is not sufficient to cover the electricity demand, a blackout may occur. Also, repetition of automatic start and stop of the power turbine and/or repetition of supply and shut-off of induction steam may occur.

According to the present configuration, an output decrease is absorbed by the output of the power turbine, enabling prevention of repetition of automatic start and stop of the power turbine and repetition of supply and shut-off of induction steam, and shut-off of electricity.

In the first aspect, it is possible that: if the opening degree of the steam turbine speed governing valve is equal to or exceeds a first threshold value, the turbine control section controls the power turbine control valve in an opening direction; if the opening degree of the steam turbine speed governing valve is below a second threshold value that is a value smaller than the first threshold value, the turbine control section controls the power turbine control valve in a closing direction; and if the opening degree of the steam turbine speed governing valve is equal to or exceeds the second threshold value but is below the first threshold value, the turbine control section performs control to maintain the opening degree of the power turbine control valve.

In the first aspect, it is possible that the turbine control section controls the speed of operation of the power turbine control valve based on a deviation of the opening degree of the steam turbine speed governing valve from the first threshold value or a deviation of the opening degree of the steam turbine speed governing valve from the second threshold value.

In the first aspect, it is possible that: if the opening degree of the steam turbine speed governing valve is equal to or exceeds the first threshold value, the turbine control section subjects the gain by which the speed of operation of the power turbine control valve is multiplied, to weighting according to the deviation of the opening degree of the steam turbine speed governing valve from the first threshold value; and if the opening degree of the steam turbine speed governing valve is below the second threshold value, the turbine control section subjects the gain by which the speed of operation of the power turbine control valve is multiplied, to weighting according to the deviation of the opening degree of the steam turbine speed governing valve from the second threshold value.

An electricity generation system control method according to the present invention includes the steps of: driving a power turbine via exhaust gas generated in a main engine; driving a steam turbine via steam generated by the exhaust gas from the main engine; controlling an amount of the exhaust gas to be introduced to the power turbine; adjusting an amount of steam to be supplied to the steam turbine; controlling load sharing between an output of the power turbine and an output of the steam turbine and setting a target output for the steam turbine; and performing governor control based on the target output of the steam turbine, and the method further includes the steps of: calculating a target output for the power turbine based on the target output of the steam turbine and a load capacity of the steam turbine; and when an electricity demand varies, multiplying a speed of operation of a power turbine control valve by a gain set based on a deviation of an actual output of the power turbine from the target output of the power turbine.

According to the present invention, a power turbine control valve is controlled based on an output deviation of a power turbine or an opening degree of a steam turbine speed governing valve, and thus, adjustment of power turbine output can be made via simple control without provision of a governor for the power turbine. The present invention enables effective utilization of exhaust heat and achievement of an optimum energy efficiency and also enables prevention of unnecessary stoppage of operation of a power turbine.

Brief Description of Drawings

[FIG. 1] FIG. 1 is a diagram of an overall configuration of a turbine generator system according to the present disclosure.
[FIG. 2] FIG. 2 is a configuration diagram illustrating an overall configuration of a control device according to a first embodiment of the present disclosure.
[FIG. 3] FIG. 3 is a block diagram illustrating control of a power turbine control valve and a steam turbine speed governing valve according to the first embodiment of the present disclosure.
[FIG. 4] FIG. 4 is a table representing a relationship among operation state, power turbine output deviation and gain according to the first embodiment of the present disclosure.
[FIG. 5] FIG. 5 is a graph indicating a relationship between power turbine output deviation and gain as an example according to the first embodiment of the present disclosure.
[FIG. 6] FIG. 6 includes diagrams each illustrating load sharing between a power turbine and a steam turbine according to the first embodiment of the present disclosure.
[FIG. 7] FIG. 7 is a table representing a relationship among electricity demand state, steam turbine speed governing valve opening degree and power turbine control valve operation rate according to a second embodiment of the present disclosure, which does not fall within the scope of the claims.
[FIG. 8] FIG. 8 is a graph indicating a relationship between steam turbine speed governing valve opening degree and power turbine control valve operation rate, as an example according to the second embodiment of the present disclosure.

Best Mode for Carrying Out the Invention

Embodiments of an electricity generation system and an electricity generation system control method according to the present disclosure will be described below with reference to the drawings.

[First Embodiment]

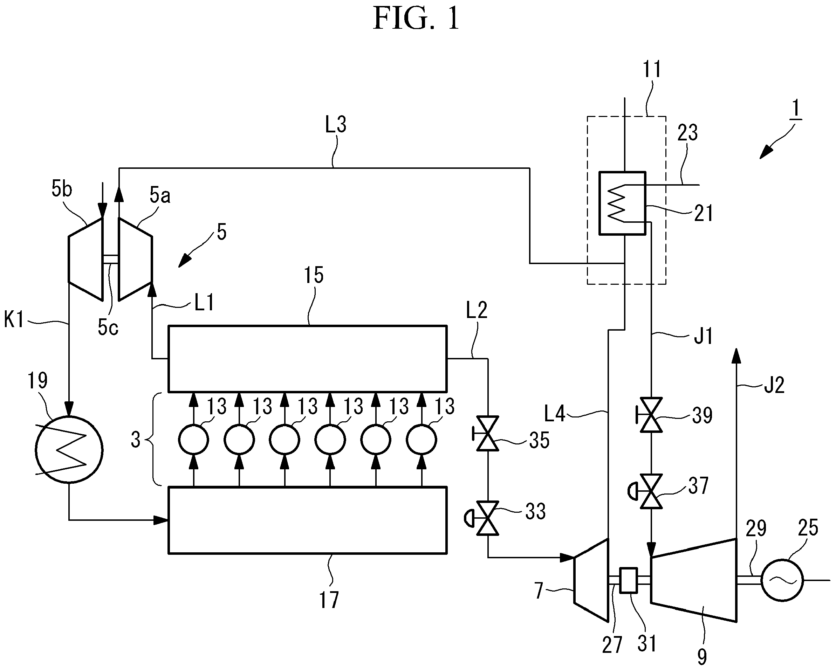

A first embodiment of the present disclosure will be described below with reference to FIGS. 1 to 6.
FIG. 1 illustrates a schematic configuration of a turbine generator system equipped with an electricity generation system and an electricity generation system control method according to the present embodiment. In the present embodiment, a diesel engine for ship propulsion is used as a main engine. Therefore, an electricity demand represents an inboard load.

The turbine generator system 1 includes an engine (main engine) 3, a turbocharger 5 to be driven by exhaust gas of the engine 3, a power turbine (gas turbine) 7 to be driven by the exhaust gas of the engine 3, the exhaust gas being bled from the upstream side of the turbocharger 5, an exhaust gas economizer (exhaust gas boiler) 11 that generates steam using the exhaust gas of the engine 3, and a steam turbine 9 to be driven by steam generated by the exhaust gas economizer 11.

An output from the engine 3 is directly or indirectly connected to a screw propeller via a propeller shaft. An exhaust port of a cylinder section 13 of each cylinder of the engine 3 is connected to an exhaust manifold 15, which serves as an exhaust gas collection pipe. The exhaust manifold 15 is connected to the entrance side of a turbine section 5a of the turbocharger 5 via a first exhaust pipe L1. The exhaust manifold 15 is connected to the entrance side of the power turbine 7 via a second exhaust pipe L2 (bleeding passageway), and a part of the exhaust gas is bled and supplied to the power turbine 7 before supply of the exhaust gas to the turbocharger 5.

On the other hand, a charge port of each cylinder section 13 is connected to a charge manifold 17. The charge manifold 17 is connected to a compressor section 5b of the turbocharger 5 via a charge pipe K1. Also, an air cooler (intercooler) 19 is installed at the charge pipe K1.

The turbocharger 5 includes the turbine section 5a, the compressor section 5b and a rotary shaft 5c between the turbine section 5a and the compressor section 5b.

The power turbine 7 is driven to rotate, by the exhaust gas bled from the exhaust manifold 15 via the second exhaust pipe L2. Also, the steam turbine 9 is supplied with steam generated by the exhaust gas economizer 11 and is thereby driven to rotate.

The exhaust gas discharged from the exit side of the turbine section 5a of the turbocharger 5 via a third exhaust pipe L3 and the exhaust gas discharged from the exit side of the power turbine 7 via a fourth exhaust pipe L4 are introduced to the exhaust gas economizer 11, and water supplied by a water supply pipe 23 is evaporated by heat of the exhaust gas to generate steam, by means of a heat exchange section 21. Then, the steam generated by the exhaust gas economizer 11 is introduced to the steam turbine 9 via a first steam pipe J1. The steam that has completed its task in the steam turbine 9 is discharged via a second steam pipe J2 and guided to a non-illustrated condenser.

The power turbine 7 and the steam turbine 9 are coupled in series and drive a turbine generator 25. A rotary shaft 29 of the steam turbine 9 is connected to the turbine generator 25 via a reducer and a coupling, which are not illustrated. A rotary shaft 27 of the power turbine 7 is joined to the rotary shaft 29 of the steam turbine 9 via a non-illustrated reducer and a clutch 31. For the clutch 31, a clutch that is engaged/disengaged with a predetermined number of rotations is used, and for example, an SSS (synchro-self-shifting) clutch is preferably used. The present embodiment is configured so that the power turbine 7 and the steam turbine 9 are coupled in series and drives the turbine generator 25. However, it is possible that the power turbine 7 and the steam turbine 9 are coupled in parallel and drive the turbine generator 25 by means of respective rotary powers via a reducer.

Also, a power turbine control valve 33, which is an opening degree adjustment valve that controls an amount of exhaust gas introduced to the power turbine 7, and an emergency shut-off valve 35 for emergency stop, which is an on-off valve that shuts off supply of exhaust gas to the power turbine 7 in an emergency, are provided at the second exhaust pipe L2.

Furthermore, a steam turbine speed governing valve 37, which is an opening degree adjustment valve that controls an amount of steam introduced to the steam turbine 9, and an emergency shut-off valve 39 for emergency stop, which is an on-off valve that shuts off supply of steam to the steam turbine 9 in an emergency, are installed at the first steam pipe J1. An opening degree of the steam turbine speed governing valve 37 is controlled by a governor section 59 in an electricity generation system control device 43, which will be described later.

As described above, the turbine generator system 1 is driven with exhaust energy of exhaust gas (combustion gas) of the engine 3 as power and provides an exhaust energy collection device.

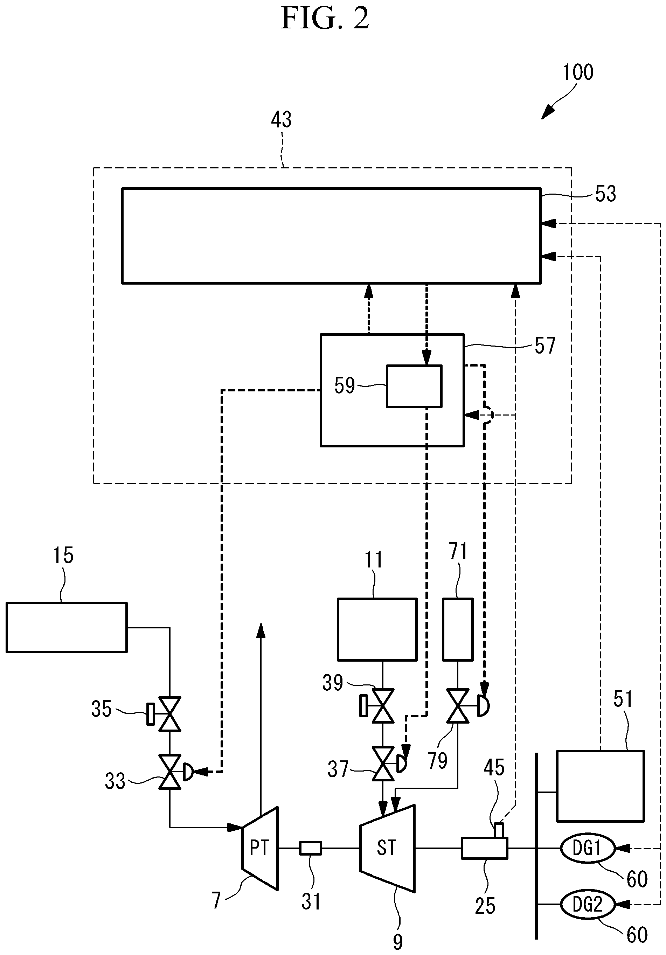

FIG. 2 illustrates an overall configuration of an electricity generation system including the turbine generator system illustrated in FIG. 1.

An electricity generation system 100 includes a plurality of (two in the present embodiment) diesel engine generators (generators) 60 installed on board separately from the turbine generator system 1 (see FIG. 1).

A signal from an electricity sensor 45 that detects output electricity of the turbine generator 25 is input to the electricity generation system control device 43. Also, output signals from the diesel engine generators 60 and a signal from an inboard consumed electricity sensor 51 that detects inboard consumed electricity are input to the electricity generation system control device 43.

Also, the electricity generation system control device 43 includes a PMS (power management system/load sharing control section) 53, a TCP (turbine control panel/turbine control section) 57, and a governor section (not illustrated) for the diesel engine generators 60. Also, the TCP 57 includes the governor section 59. The governor section 59 is intended to control a rotation speed of the steam turbine 9. The governor section 59 outputs an opening degree of the steam turbine speed governing valve 37 according to a speed setting of a rotation speed designated by the PMS 53, to the steam turbine speed governing valve 37 and thereby controls an output of the steam turbine 9.

The electricity generation system control device 43 includes, for example, a CPU (central processing unit), a RAM (random access memory), a ROM (read-only memory) and a computer-readable non-temporary storage medium, etc. Then, a series of processing for providing each of various functions is stored in the form of a program in, e.g., a storage medium as an example, and the CPU reads the program onto, e.g., the RAM and performs processing and arithmetic operation of information, thereby providing such function. The program may be installed in advance on the ROM or another storage medium, may be provided in such a manner that the program is stored in a computer-readable storage medium or may be distributed via a wired or wireless communication means. The computer-readable storage medium is, e.g., a magnetic disk, a magnetooptical disk, a CD-ROM, a DVD-ROM or a semiconductor memory.

An output instruction signal according to a load factor set by the PMS 53 is output to each of the TCP 57 and the governor section for the diesel engine generators 60.

A control signal is output to the governor section 59 of the TCP 57 according to an output burden share for the steam turbine 9, the output burden share being designated from the PMS 53. The governor section 59 outputs an opening degree of the steam turbine speed governing valve 37 according to the control signal, to the steam turbine speed governing valve 37. The opening degree of the steam turbine speed governing valve 37 is controlled and thus an amount of steam supplied to the steam turbine 9 is controlled.

The power turbine 7, the steam turbine 9 and the turbine generator 25 are coupled to one another in series on a single axis. As a governor, only the governor section 59 for the steam turbine 9, which is a main prime mover, is installed. No governor is installed for the power turbine 7. The power turbine 7 is controlled by the power turbine control valve 33. During steady operation, the power turbine control valve 33 is consistently fully opened.

Here, steady operation of the electricity generation system 100 in the present embodiment is an operation in which: where the turbine generator 25 and the diesel engine generators 60 operate in parallel; the steam turbine 9 and the power turbine 7 are made to operate with respective maximum outputs, with the steam turbine 9 as a main prime mover; and inboard load variation is absorbed by the diesel engine generators 60.

Also, induction steam is supplied from a low-pressure steam source 71 to an intermediate stage of the steam turbine 9. An adjustment valve 79 is installed on an induction steam supply line. The adjustment valve 79 is an opening degree adjustment valve that controls an amount of induction steam introduced to the steam turbine 9. An opening degree of the adjustment valve 79 increases or decreases along with an increase and a decrease in amount of generated steam in the low-pressure steam source 71. Therefore, upon change in amount of supply of induction steam, the output of the steam turbine 9, that is, the control of the opening degree of the steam turbine speed governing valve 37 by the governor section 59 changes so as to absorb the amount of the change. Examples of the low-pressure steam source include a low-pressure stage (see FIG. 1) of the exhaust gas economizer 11.

Here, in the electricity generation system 100, where the turbine generator 25 and the diesel engine generators 60 operate in parallel, when there is a variation in inboard load, the diesel engine generators 60 can absorb an amount of the inboard load variation in a state in which the steam turbine 9 and the power turbine 7 operate with respective maximum outputs.

However, in the electricity generation system 100, where the turbine generator 25 operates in a self-sustained manner or where there is a load limitation such as the diesel engine generators 60 that operate in parallel with the turbine generator 25 operating with a minimum output, when a variation in inboard load occurs, a load of the power turbine 7 cannot be adjusted because the load of the power turbine 7 is fixed. Therefore, it is necessary to adjust an increase or decrease of load according to the inboard load, using the output of the steam turbine 9, which may result in generation of dumped steam in some cases.

Therefore, steam obtained as a result of exhaust heat collection is supplied to the steam turbine 9 to collect all of the steam as a generator output without generating dumped steam. Thus, for the output of the power turbine 7, also, a load increase or decrease according to the inboard load is adjusted to enhance responsiveness to load variation and widen a responsive range for load variation.

More specifically, the power turbine control valve 33 is operated at the time of a load variation to adjust a load increase or decrease by means of the output of the power turbine 7.

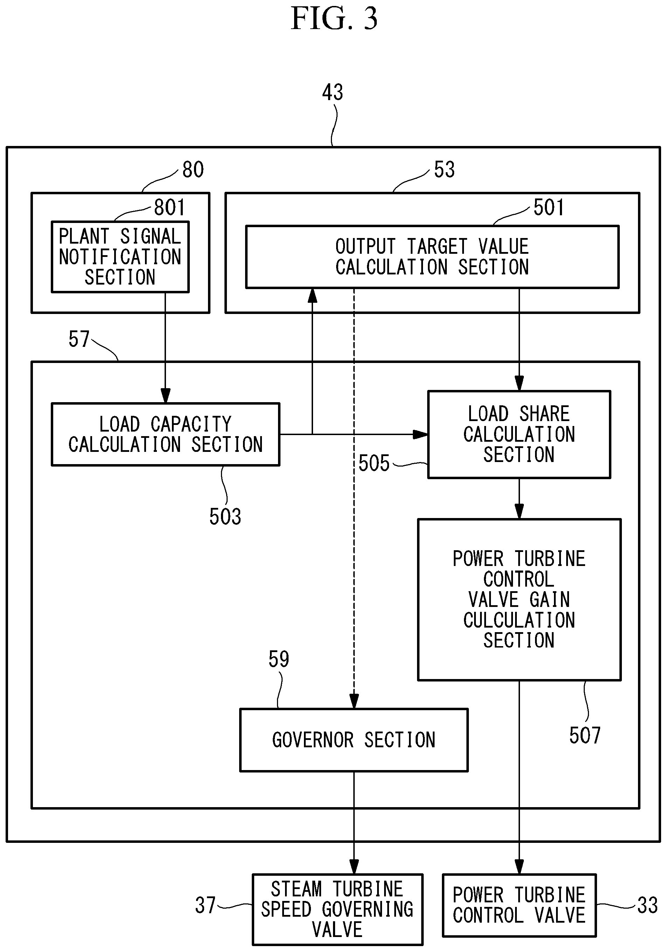

FIG. 3 is a block diagram of control of a power turbine control valve and a steam turbine speed governing valve according to the first embodiment of the present disclosure.

As illustrated in FIG. 3, the electricity generation system control device 43 includes the PMS 53, the TCP 57 and a plant information acquisition section 80. The electricity generation system control device 43 performs control of the power turbine control valve 33 and the steam turbine speed governing valve 37.

First, a load capacity calculation section 503 of the TCP 57 is notified of a plant signal acquired by the plant information acquisition section 80, by a plant signal notification section 801.

Based on a signal of, e.g., a steam state in the plant signal, the load capacity calculation section 503 calculates respective load capacities of the electricity generation system 100, the steam turbine 9 and the power turbine 7.

Next, the output target value calculation section 501 of the PMS 53 calculates an output target value for the electricity generation system 100 based on the load capacity of the electricity generation system 100, which has been calculated by the load capacity calculation section 503, and the inboard load.

Next, based on the output target value of the electricity generation system 100 and the load capacity of the steam turbine 9, the load share calculation section 505 of the TCP 57 calculates an output target value for the power turbine 7. Where LT(STG) is an output target value of the electricity generation system 100 and Av(ST) is a load capacity of the steam turbine 9, an output target value LT(PT) of the power turbine 7 can be expressed by Expression (1) below.

$$LT(PT) = LT(STG) - Av(ST) \qquad (1)$$

Next, based on the output target value LT(PT) of the power turbine 7, an opening degree operation gain calculation section 507 sets a gain (opening degree operation gain) by which a speed of operation of the power turbine control valve 33 is multiplied and outputs an opening degree of the power turbine control valve 33 to the power turbine control valve 33.

Also, the PMS 53 outputs a control signal according to an output burden share of the steam turbine 9, the output burden share being based on the output target value of the electricity generation system 100, which has been calculated by the output target value calculation section 501, to the governor section 59. The governor section 59 outputs an opening degree of the steam turbine speed governing valve 37 to the steam turbine speed governing valve 37.

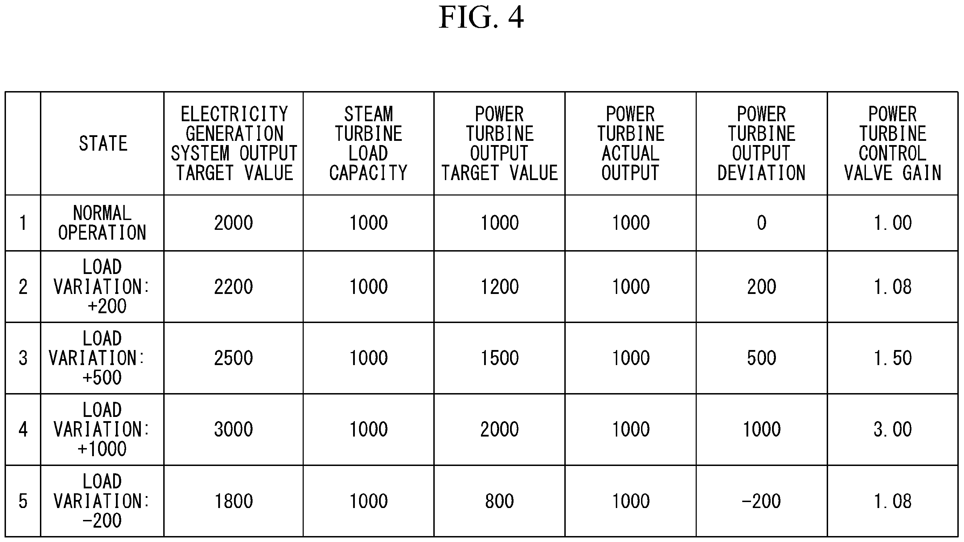

In FIG. 4, a relationship among operation state, power turbine output deviation and gain according to the present embodiment is indicated in a table.

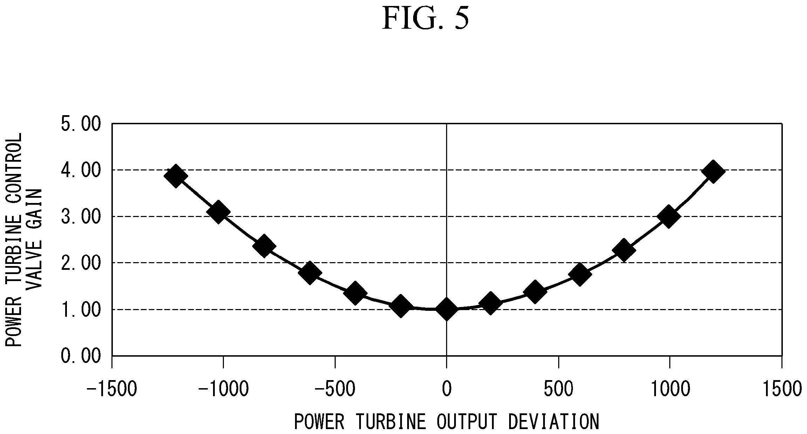

Also, in FIG. 5, a relationship among power turbine output deviation and gain, which is an example according to the present embodiment, is indicated in a graph. In FIG. 5, the ordinate axis represents opening degree operation gain and the abscissa axis represents P/T deviation, which will be described later.

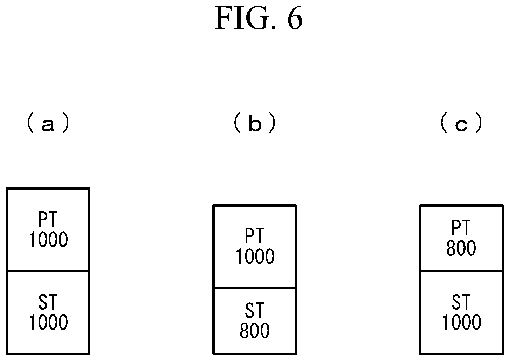

Also, in FIG. 6, load shares of a power turbine and a steam turbine according to the present embodiment are indicated in diagrams.

At the time of normal operation, which is a state of operation in which an inboard electricity demand amount and a electricity generation amount correspond to each other, the output target value and an actual output of the power turbine 7 correspond to each other and no load variation occurs, the power turbine control valve 33 is controlled by means of PI control so that an actual output Act(PT) of the power turbine 7 is adjusted to the output target value LT(PT) of the power turbine 7. In this case, for example, if a PI gain value of the power turbine control valve 33 is a constant value, it may be impossible to follow a sudden load variation when there is a sudden variation in output target value LT(STG) of the electricity generation system 100. Therefore, the opening degree operation gain is varied based on a deviation of the actual output Act(PT) of the power turbine 7 from the output target value LT(PT) of the power turbine 7 (hereinafter referred to as "P/T deviation"). Here, the opening degree operation gain is set so that as the P/T deviation is larger, a speed of operation of the power turbine control valve 33 is increased more.

Although in FIG. 5, values of opening degree operation gain according to P/T deviation are indicated in the form of a function in a graph, the graph is a mere example, and in reality, adjustment according to operation of the electricity generation system 100 is necessary. Values of opening degree operation gain according to P/T deviation can arbitrarily be set irrespective of the function in FIG. 5.

An opening degree operation gain is calculated based on P/T deviation.

As indicated in item 1 in FIG. 4, where the output target value LT(STG) of the electricity generation system 100 when the electricity generation system 100 is in the normal operation is 2000, the load capacity Av(ST) of the steam turbine 9 is 1000, the output target value LT(PT) of the power turbine 7 is 1000 and the actual output Act(PT) of the power turbine 7 is 1000, the P/T deviation is 0.

As indicated in FIG. 5, the opening degree operation gain where the P/T deviation is 0 is set as a reference value of 1.

Also, as indicated in item 2 of FIG. 4, if a load variation occurs and the output target value LT(STG) of the electricity generation system 100 becomes 2200, which is the value in the normal operation plus 200, the output target value LT(PT) of the power turbine 7 is set as 1200 and the P/T deviation becomes 200.

Where the P/T deviation is 200, as indicated in FIG. 5, the opening degree operation gain is 1.08, and the speed of operation of the power turbine control valve 33 is multiplied by 1.08. Therefore, the speed of operation of the power turbine control valve 33 becomes higher than that in the normal operation. Here, if the P/T deviation is a positive value, the actual output is short of the target value, and thus, the power turbine control valve 33 is made to operate in an opening direction to increase the output of the power turbine 7. On the other hand, if the P/T deviation is a negative value, the actual output is in excess of the target value and thus the power turbine control valve 33 is made to operate in a closing direction to decrease the output of the power turbine 7.

Here, for example, where no opening degree operation gain is set and the load of the electricity generation system 100 instantly varies from item 1 to item 5 in FIG. 4, that is, there is a sudden load variation in the decreasing direction from 2000 to 1800, it is necessary to adjust the amount of the load decrease using the output of the steam turbine 9 because the load of the power turbine 7 is fixed. Therefore, the load sharing in FIG. 6(a) transitions to the load sharing state in FIG. 6(b) and the load of the power turbine 7 is 1000, which is fixed, and the load of the steam turbine 9 is 800. If the load of the steam turbine 9 decreases, dumped steam may occur in some cases.

Therefore, in the present embodiment, in order to prevent steam obtained as a result of exhaust heat collection from becoming dumped steam, an opening degree operation gain is set to decrease the load of the power turbine 7 without decreasing the load of the steam turbine 9, enabling provision of a response that is similar to that in the case where a governor is provided for the power turbine 7.

If the load of the electricity generation system 100 instantly varies from 2000 in item 1 to 1800 in item 5 in FIG. 4, the opening degree operation gain becomes 1.08. In this case, the power turbine control valve 33 operates faster than normal in the closing direction according to the opening degree operation gain, toward the output target value LT(PT) of the power turbine 7, which is 800. On the other hand, the output of the steam turbine 9 increases so as to compensate for the load of the electricity generation system 100. As a result, as indicated in FIG. 6(c), the load of the power turbine 7 decreases to 800 and the load of the steam turbine 9 becomes 1000, and thus, an operation in which the load of the power turbine 7 is decreased without decreasing the load of the steam turbine 9 (returning the load of the steam turbine 9 to an initial load) can be achieved.

Also, as indicated in items 2 to 4 in FIG. 4, as the output target value LT(STG) of the electricity generation system 100 is made to be larger because of a load variation, the output target value LT(PT) of the power turbine 7 becomes larger and the P/T deviation also has a larger value. Therefore, the opening degree operation gain has a larger value, that is, as the P/T deviation is larger, the speed of operation of the power turbine control valve 33 becomes higher.

As described above, the electricity generation system and the electricity generation system control method according to the present embodiment exert the following operation and effects.

A target output of the power turbine 7 is calculated based on a target output of the steam turbine 9 and a load capacity of the steam turbine 9, and if an electricity demand varies, a speed of operation of the power turbine control valve 33 is multiplied by a gain set based on a deviation of an actual output of the power turbine 7 from the target output of the power turbine 7. Load sharing control that enables provision of an optimum energy efficiency can be performed without a governor being provided for the power turbine control valve 33, and control that is simpler than that in the case where a governor is provided can be performed.

For example, if a needed load, that is, an electricity demand is decreased, load sharing can be controlled so that a decrease in load share of the steam turbine 9 is suppressed and the power turbine 7 assumes the decrease. A decrease in output due to the decrease in electricity demand is absorbed by an output of the power turbine 7 without being absorbed by an output of the steam turbine 9. Consequently, the output of the steam turbine 9 does not decrease and generation of dumped steam can thus be avoided, enabling effective utilization of exhaust gas and thus enabling efficient power generation.

Also, no governor is provided for the power turbine control valve 33, enabling facility costs to be kept low.

Also, in the steam turbine speed governing valve 37, generally, a lower limit value is provided for an opening degree of a valve operated by the governor section 59 or a steam turbine output as a safety. When an output decrease due to an electricity demand decrease falls beyond the load capacity of the steam turbine, the steam turbine speed governing valve 37 is made to operate in a closing direction with the output of the power turbine 7 maintained. Thus, for example, if the output of the power turbine 7 remains when the steam turbine speed governing valve 37 is fully closed, an overspeed may be made to occur by the output of the power turbine 7. Therefore, if the output of the steam turbine 9 falls below the lower limit, stop of the power turbine 7 or shut-off of the induction steam is forcibly performed to prevent an overspeed of the steam turbine 9. However, the stop of the power turbine 7 or the shut-off of induction steam may cause instability of electricity generation such as a decrease in output, or stop of some loads or a blackout if an output (steam generation amount) of the steam turbine 9 is not sufficient to cover the inboard load. Also, repetition of automatic start and stop of the power turbine 7 and/or repetition of supply and shut-off of induction steam may occur.

According to the present configuration, an output decrease is absorbed by the output of the power turbine 7, enabling prevention of repetition of automatic start and stop of the power turbine 7 and repetition of supply and shut-off of induction steam, and shut-off of electricity.

[Second Embodiment]

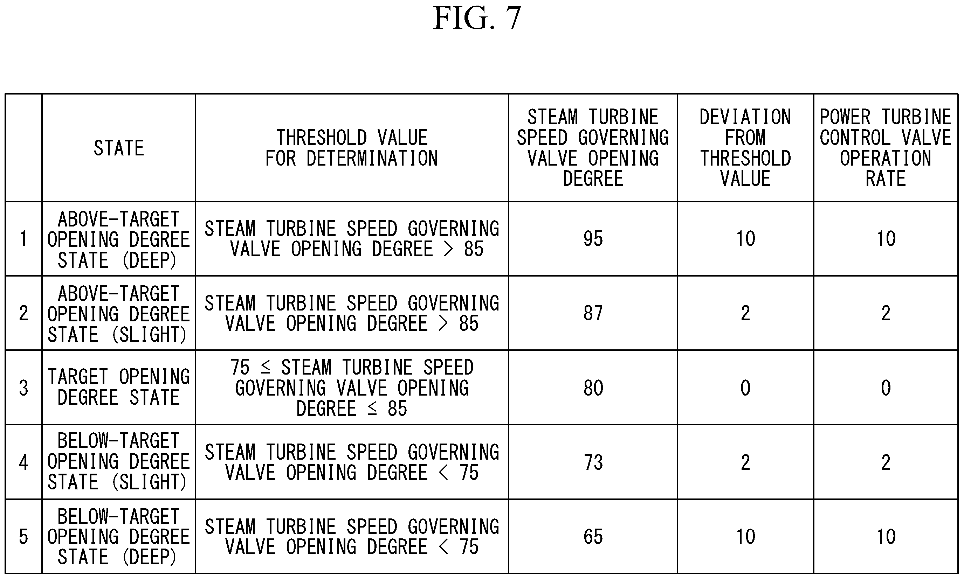

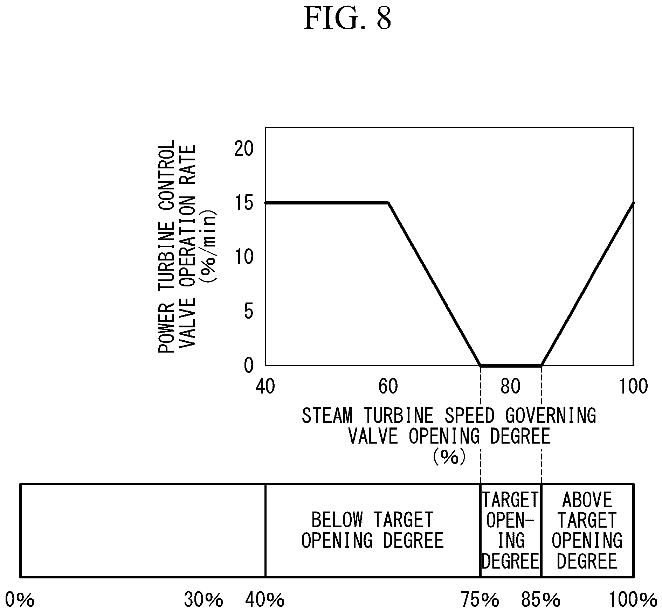

A second embodiment of the present disclosure which does not fall within the scope of the claims will be described below with reference to FIGS. 7 and 8.

While in the above-described first embodiment, a power turbine control valve is controlled using an opening degree operation gain based on a P/T deviation, in the present embodiment, a power turbine control valve is controlled using an opening degree of a steam turbine speed governing valve. For the rest, the present embodiment is similar to the first embodiment, and thus, components that are the same as those of the first embodiment are provided with reference numerals that are the same as those of the first embodiment and description thereof will be omitted.

In FIG. 7, a relationship among electricity demand state, steam turbine speed governing valve opening degree and power turbine control valve operation rate according to the present embodiment is indicated in a table.

Also, in FIG. 8, a relationship between steam turbine speed governing valve opening degree and power turbine control valve operation rate, which is an example according to the present embodiment, is indicated in a graph. In FIG. 8, the ordinate axis represents the operation rate (%/min) of a power turbine control valve and the abscissa axis represents the steam turbine speed governing valve opening degree (%).

In an electricity generation system 100, an opening degree of a steam turbine speed governing valve 37 is categorized into a state in which the opening degree of the steam turbine speed governing valve 37 is equal to a target opening degree, a state in which the opening degree of the steam turbine speed governing valve 37 exceeds the target opening degree and a state in which the opening degree of the steam turbine speed governing valve 37 is below the target opening degree, and these states are taken into consideration. Where the opening degree of the steam turbine speed governing valve 37 in the state in which the opening degree is equal to the target opening degree (target opening degree state) falls in a range of no less than a second threshold value but no more than a first threshold value, the opening degree of the steam turbine speed governing valve 37 in the state in which the opening degree exceeds the target opening degree (above-target opening degree state) falls in a range of more than the first threshold value, and the opening degree of the steam turbine speed governing valve 37 in the state in which the opening degree is below the target opening degree (below-target opening degree state) falls in a range of less than the second threshold value.

The first threshold value and the second threshold value provide a set value range (dead band) that is around a rated output of a steam turbine 9 (for example, a small percent above and below the rated output) to the opening degree of the steam turbine speed governing valve 37. The dead band is provided for the valve opening degree of the steam turbine speed governing valve 37 is provided, and the power turbine control valve 33 is adjusted so that the opening degree of the steam turbine speed governing valve 37 falls within the dead band. Here, a maximum value and a minimum value are set for an actual output Act(PT) of the power turbine 7 and the power turbine control valve 33 is adjusted within such range.

If the opening degree of the steam turbine speed governing valve 37 is an opening degree in the range of the above-target opening degree state, the power turbine control valve 33 is made to operate in an opening direction to increase an output of the power turbine 7 and thereby cause the steam turbine speed governing valve 37 to operate in a closing direction. Also, if the opening degree of the steam turbine speed governing valve 37 is an opening degree in the range of the below-target opening degree state, the power turbine control valve 33 is made to operate in a closing direction to decrease the output of the power turbine 7 and thereby cause the steam turbine speed governing valve 37 to operate in an opening direction.

In this case, for example, if an opening/closing rate of the power turbine control valve 33 is a constant value, it may become difficult to perform control in case of a sudden variation in output target value LT(STG) of the electricity generation system 100. Therefore, a difference between the above-described first threshold value and the second threshold value and the opening degree of the steam turbine speed governing valve 37 (hereinafter referred to as "threshold value difference") is obtained and based on the threshold value difference, an operation rate of the power turbine control valve 33 is changed. Here, the operation rate is set so that as the threshold value difference is larger, a speed of operation of the power turbine control valve 33 is higher.

In FIG. 8, values of operation rate of the power turbine control valve 33 according to opening degree of the steam turbine speed governing valve 37 are indicated in the form of a function in a graph. However, this graph indicates a mere example, and an arbitrary setting can be made irrespective of this function.

The operation rate of the power turbine control valve 33 is calculated based on the opening degree of the steam turbine speed governing valve 37. In the present embodiment, the operation rate of the power turbine control valve 33 is a threshold value difference value (%/min) calculated based on the opening degree of the steam turbine speed governing valve 37.

As indicated in item 3 in FIG. 7, it is assumed that the opening degree of the steam turbine speed governing valve 37 in the target opening degree state is in a range of no less than 75% but no more than 85%. In other words, the first threshold value is set as 85% and the second threshold value is set as 75%. These values of the first threshold value and the second threshold value are mere examples and can arbitrarily be set.

In the target opening degree state in item 3 in FIG. 7, if the opening degree of the steam turbine speed governing valve 37 is 80%, there is no threshold value difference (=0).

If the threshold value difference is 0, as indicated in FIG. 8, the operation rate is 0, and the opening degree of the power turbine control valve 33 is maintained.

Also, as indicated in item 2 in FIG. 7, in the above-target opening degree state, if the opening degree of the steam turbine speed governing valve 37 is 87%, which is an opening degree in the range of the above-target opening degree state (opening degree has a value that is more than 85%), the threshold value difference is 2.

If the opening degree of the steam turbine speed governing valve 37 is 87%, as indicated in the graph in FIG. 8, the operation rate of the power turbine control valve 33 is 2 (%/min). Here, since the opening degree of the steam turbine speed governing valve 37 being an opening degree in the range of the above-target opening degree state means that an actual output is short of a target value, the power turbine control valve 33 is made to operate in the opening direction to increase the output of the power turbine 7. Consequently, the steam turbine speed governing valve 37 is made to operate in the closing direction so that the opening degree of the steam turbine speed governing valve 37 falls within the dead band, and is thereby brought into the target opening degree state.

As indicated in items 1 and 2 in FIG. 7, as the opening degree of the steam turbine speed governing valve 37 is more deeply in the above-target opening degree state and the opening degree of the steam turbine speed governing valve 37 is larger, the threshold value difference has a larger value. Therefore, the operation rate of the power turbine control valve 33 has a larger value, that is, as the opening degree of the steam turbine speed governing valve 37 is larger, the power turbine control valve 33 is made to operate quickly in the opening direction.

Also, as indicated in item 4 in FIG. 7, in the below-target opening degree state, if the opening degree of the steam turbine speed governing valve 37 is 73%, which is an opening degree in the range of the below-target opening degree state (opening degree has a value of less than 75%), the threshold value difference is 2.

If the opening degree of the steam turbine speed governing valve 37 is 73%, as indicated in the graph in FIG. 8, the operation rate of the power turbine control valve 33 is 2 (%/min). Here, since the opening degree of the steam turbine speed governing valve 37 being an opening degree in the range of the below-target opening degree state means that an actual output is in excess of a target value, the power turbine control valve 33 is made to operate in the closing direction to decrease the output of the power turbine 7. Consequently, the steam turbine speed governing valve 37 is made to operate in the opening direction steam so that the opening degree of the turbine speed governing valve 37 falls within the dead band, and is thereby brought into the target opening degree state.

As indicated in items 4 and 5 in FIG. 7, as the steam turbine speed governing valve 37 is more deeply in the below-target opening degree state and as the opening degree of the steam turbine speed governing valve 37 is smaller, the threshold value difference has a larger value. Therefore, the operation rate of the power turbine control valve 33 also has a larger value, that is, as the opening degree of the steam turbine speed governing valve 37 is smaller, the power turbine control valve 33 is made to more quickly operate in the closing direction.

According to the above, as indicated in the graph in FIG. 8, if the opening degree of the steam turbine speed governing valve 37 is an opening degree in the range of the target opening degree state (no less than 75% but no more than 85%), the opening degree of the power turbine control valve 33 is maintained without being changed. If the opening degree of the steam turbine speed governing valve 37 is an opening degree in the range of the above-target opening degree state, as the opening degree is increased in a direction toward 100% from 85%, the operation rate is increased to more quickly open the power turbine control valve 33. Also, if the opening degree of the steam turbine speed governing valve 37 is an opening degree in the range of the below-target opening degree state, as the opening degree is decreased in a direction toward 0% from 75%, the operation rate is increased to more quickly close the power turbine control valve 33. In other words, in the present embodiment, the operation rate of the power turbine control valve 33 is subjected to weighting according to deviation from the dead band for the opening degree of the steam turbine speed governing valve 37.

Here, in order to prevent an overspeed of the steam turbine 9 owning to the output of the power turbine 7 when the opening degree of the steam turbine speed governing valve 37 is decreased, if the opening degree of the steam turbine speed governing valve 37 is decreased to 40%, a normal stop in which the output of the power turbine 7 is gradually decreased and stopped is made, and if the opening degree of the steam turbine speed governing valve 37 is decreased to 30%, a safety that trips (instantly shuts down) the power turbine 7 is activated.

As described above, the electricity generation system and the electricity generation system control method according to the present embodiment exert the following operation and effects.

Since the operation speed and the opening degree of the power turbine control valve 33 are controlled based on the opening degree of the steam turbine speed governing valve 37, load sharing control that enables provision of an optimum energy efficiency can be performed without provision of a governor for the power turbine control valve 33, and control that is simpler than that in the case where a governor is provided can be performed.

For example, if a needed load, that is, an electricity demand is decreased (electricity excess state), load sharing can be controlled by making the power turbine control valve 33 to operate in the closing direction so that a decrease in load share of the steam turbine 9 is suppressed and the power turbine 7 assumes the decrease. A decrease in output due to the decrease in electricity demand is absorbed by an output of the power turbine 7 without being absorbed by an output of the steam turbine 9, and thus, the output of the steam turbine 9 does not decrease and generation of dumped steam can be avoided, enabling effective utilization of exhaust gas and thus enabling efficient power generation.

Also, no governor is provided for the power turbine control valve 33, enabling facility costs to be kept low.

Also, in the steam turbine speed governing valve 37, generally, a lower limit value is provided for an opening degree of a valve operated by the governor section 59 or a steam turbine output as a safety. This is because while when an output decrease due to an electricity demand decrease falls beyond the load capacity of the steam turbine 9, the steam turbine speed governing valve 37 is made to operate in a closing direction with the output of the power turbine 7 maintained, for example, if the output of the power turbine 7 remains when the steam turbine speed governing valve 37 is fully closed, an overspeed may be made to occur by the output of the power turbine 7. Therefore, if the output of the steam turbine 9 falls below the lower limit, stop of the power turbine 7 or shut-off of the induction steam are forcibly performed to prevent an overspeed of the steam turbine 9. However, the stop of the power turbine 7 or the shut-off of induction steam may cause instability of electricity generation such as a decrease in output, or stop of some loads or a blackout if an output (steam generation amount) of the steam turbine 9 is not sufficient to cover the inboard load. Also, repetition of automatic start and stop of the power turbine 7 and/or repetition of supply and shut-off of induction steam may occur.

According to the present configuration, an output decrease is absorbed by the output of the power turbine 7, enabling prevention of repetition of automatic start and stop of the power turbine 7 and repetition of supply and shut-off of induction steam, and shut-off of electricity.

Although each of embodiments of the present disclosure has been described above with reference to the drawings, a specific configuration of the present disclosure is not limited to those in the embodiments, and include design changes, etc., without departing the scope of the present disclosure.

For example, each of the above-described embodiments has been described in terms of an electricity generation system 100 to be used in a ship, but can be used as an electricity generation system 100 on land.

Explanation of Reference:

| | |
|---|---|
| 1: | turbine generator system |
| 3: | engine (main engine) |
| 5: | turbocharger |
| 7: | power turbine |
| 9: | steam turbine |
| 11: | exhaust gas economizer |
| 25: | turbine generator (generator) |
| 33: | power turbine control valve |
| 37: | steam turbine speed governing valve |
| 43: | electricity generation system control device |
| 53: | PMS (load sharing control section) |
| 57: | TCP (turbine control section) |
| 59: | governor section (governor) |
| 60: | diesel engine generator (generator) |
| 100: | electricity generation system |

**Claims**

1.   An electricity generation system (100) comprising:

a power turbine (7) to be driven by exhaust gas generated in a main engine (3);
a steam turbine (9) to be driven by steam generated by the exhaust gas from the main engine;
a power turbine control valve (33) that controls an amount of the exhaust gas to be introduced to the power turbine (7);
a steam turbine speed governing valve (37) that adjusts an amount of steam to be supplied to the steam turbine;
a load sharing control section (53) that controls load sharing between an output of the power turbine and an output of the steam turbine and sets a target output of the steam turbine; and
a turbine control section (57) including a governor (59) that performs governor control of the steam turbine speed governing valve (37) based on the target output of the steam turbine, **characterised in that**
the turbine control section is configured to calculate a target output of the power turbine based on the target output of the steam turbine and a load capacity of the steam turbine, and
when an electricity demand varies, a speed of operation of the power turbine control valve is multiplied by a gain set based on a deviation of an actual output of the power turbine from the target output of the power turbine.

2.   An electricity generation system (100) control method comprising the steps of:

driving a power turbine (7) via exhaust gas generated in a main engine (3);
driving a steam turbine (9) via steam generated by the exhaust gas from the main engine;
controlling an amount of the exhaust gas to be introduced to the power turbine;
adjusting an amount of steam to be supplied to the steam turbine;
controlling load sharing between an output of the power turbine and an output of the steam turbine and setting a target output of the steam turbine; and
performing governor control based on the target output of the steam turbine, **characterised in that** the method further comprises the steps of:

calculating a target output of the power turbine based on the target output of the steam turbine and a load capacity of the steam turbine; and
when an electricity demand varies, multiplying a speed of operation of a power turbine control valve (33) by a gain set based on a deviation of an actual output of the power turbine from the target output of the power turbine.


**Patentansprüche**

1. Elektrizitätserzeugungssystem (100), umfassend:

eine Leistungsturbine (7), die durch Abgas angetrieben wird, das in einer Hauptmaschine (3) erzeugt wird;
eine Dampfturbine (9), die durch Dampf angetrieben wird, der durch das Abgas von der Hauptmaschine erzeugt wird,
ein Leistungsturbinensteuerventil (33), das eine Menge des Abgases steuert, die in die Leistungsturbine (7) eingeführt werden soll;
ein Dampfturbinendrehzahlregelventil (37), das eine Menge an Dampf einstellt, die der Dampfturbine zugeführt werden soll;
einen Lastverteilungssteuerabschnitt (53), der eine Lastverteilung zwischen einem Ausgang der Leistungsturbine und einem Ausgang der Dampfturbine steuert und einen Ausgangssollwert der Dampfturbine einstellt; und
einen Turbinensteuerungsabschnitt (57), der einen Regler (59) beinhaltet, der Reglersteuerung des Dampfturbinendrehzahlregelventils (37) basierend auf dem Ausgangssollwert der Dampfturbine durchführt, **dadurch gekennzeichnet, dass**
der Turbinensteuerabschnitt gestaltet ist, einen Ausgangssollwert der Leistungsturbine basierend auf dem Ausgangssollwert der Dampfturbine und einer Lastkapazität der Dampfturbine zu berechnen, und
wenn ein Elektrizitätsbedarf schwankt, eine Betriebsdrehzahl des Leistungsturbinensteuerventils mit einer Verstärkung multipliziert wird, die basierend auf einer Abweichung eines tatsächlichen Ausgangs der Leistungsturbine von dem Ausgangssollwert der Leistungsturbine eingestellt ist.

2. Steuerverfahren für ein Elektrizitätserzeugungssystem (100), umfassend die Schritte:

Antreiben einer Leistungsturbine (7) über Abgas, das in einer Hauptmaschine (3) erzeugt wird;
Antreiben einer Dampfturbine (9) durch Dampf, der durch das Abgas von der Hauptmaschine erzeugt wird,
Steuern einer Menge des Abgases, die in die Leistungsturbine eingeführt werden soll;
Einstellen einer Menge an Dampf, die der Dampfturbine zugeführt werden soll;
Steuern einer Lastverteilung zwischen einem Ausgang der Leistungsturbine und einem Ausgang der Dampfturbine und Einstellen eines Ausgangssollwerts der Dampfturbine; und
Durchführen einer Reglersteuerung basierend auf dem Ausgangssollwert der Dampfturbine, **dadurch gekennzeichnet, dass** das Verfahren weiter die Schritte umfasst:

Berechnen eines Ausgangssollwerts der Leistungsturbine basierend auf dem Ausgangssollwert der Dampfturbine und einer Lastkapazität der Dampfturbine; und
wenn ein Elektrizitätsbedarf schwankt, Multiplizieren einer Betriebsdrehzahl eines Leistungsturbinensteuerventils (33) mit einer Verstärkung, die basierend auf einer Abweichung eines tatsächlichen Ausgangs der Leistungsturbine von dem Ausgangssollwert der Leistungsturbine eingestellt ist.

**Revendications**

1. Système de génération d'électricité (100) comprenant :

   une turbine de puissance (7) devant être entraînée par un gaz d'échappement généré dans un moteur principal (3) ;
   une turbine à vapeur (9) devant être entraînée par de la vapeur générée par le gaz d'échappement provenant du moteur principal ;
   une soupape de commande de turbine de puissance (33) qui commande une quantité du gaz d'échappement devant être introduit dans la turbine de puissance (7) ;
   une soupape de régulation de vitesse de turbine à vapeur (37) qui ajuste une quantité de vapeur devant être fournie à la turbine à vapeur ;
   une section de commande de partage de charge (53) qui commande un partage de charge entre une sortie de la turbine de puissance et une sortie de la turbine à vapeur et règle une sortie cible de la turbine à vapeur ; et
   une section de commande de turbine (57) incluant un régulateur (59) qui met en œuvre une commande de régulateur de la soupape de régulation de vitesse de turbine à vapeur (37) sur la base de la sortie cible de la turbine à vapeur,
   **caractérisé en ce que**
   la section de commande de turbine est configurée pour calculer une sortie cible de la turbine de puissance sur la base de la sortie cible de la turbine à vapeur et d'une capacité de charge de la turbine à vapeur, et lorsqu'une demande d'électricité varie, une vitesse de fonctionnement de la soupape de commande de turbine de puissance est multipliée par un gain réglé sur la base d'un écart d'une sortie réelle de la turbine de puissance par rapport à la sortie cible de la turbine de puissance.

2. Procédé de commande de système de génération d'électricité (100) comprenant les étapes consistant à :

   entraîner une turbine de puissance (7) via un gaz d'échappement généré dans un moteur principal (3) ;
   entraîner une turbine à vapeur (9) via de la vapeur générée par le gaz d'échappement provenant du moteur principal ;
   commander une quantité du gaz d'échappement devant être introduit dans la turbine de puissance ;
   ajuster une quantité de vapeur devant être fournie à la turbine à vapeur ;
   commander un partage de charge entre une sortie de la turbine de puissance et une sortie de la turbine à vapeur et régler une sortie cible de la turbine à vapeur ; et
   mettre en œuvre une commande de régulateur sur la base de la sortie cible de la turbine à vapeur, **caractérisé en ce que** le procédé comprend en outre les étapes consistant à :

   calculer une sortie cible de la turbine de puissance sur la base de la sortie cible de la turbine à vapeur et d'une capacité de charge de la turbine à vapeur ; et
   lorsqu'une demande d'électricité varie, multiplier une vitesse de fonctionnement d'une soupape de commande de turbine de puissance (33) par un gain réglé sur la base d'un écart d'une sortie réelle de la turbine de puissance par rapport à la sortie cible de la turbine de puissance.

# FIG. 1

EP 3 418 512 B1

# FIG. 2

# FIG. 3

43

80
801
PLANT SIGNAL
NOTIFICATION
SECTION

53
501
OUTPUT TARGET VALUE
CALCULATION SECTION

57

LOAD CAPACITY
CALCULATION SECTION

503

505

LOAD SHARE
CALCULATION
SECTION

POWER TURBINE
CONTROL
VALVE GAIN
CULCULATION
SECTION

507

59

GOVERNOR SECTION

STEAM TURBINE
SPEED GOVERNING
VALVE
37

POWER TURBINE
CONTROL VALVE
33

## FIG. 4

| | STATE | ELECTRICITY GENERATION SYSTEM OUTPUT TARGET VALUE | STEAM TURBINE LOAD CAPACITY | POWER TURBINE OUTPUT TARGET VALUE | POWER TURBINE ACTUAL OUTPUT | POWER TURBINE OUTPUT DEVIATION | POWER TURBINE CONTROL VALVE GAIN |
|---|---|---|---|---|---|---|---|
| 1 | NORMAL OPERATION | 2000 | 1000 | 1000 | 1000 | 0 | 1.00 |
| 2 | LOAD VARIATION: +200 | 2200 | 1000 | 1200 | 1000 | 200 | 1.08 |
| 3 | LOAD VARIATION: +500 | 2500 | 1000 | 1500 | 1000 | 500 | 1.50 |
| 4 | LOAD VARIATION: +1000 | 3000 | 1000 | 2000 | 1000 | 1000 | 3.00 |
| 5 | LOAD VARIATION: −200 | 1800 | 1000 | 800 | 1000 | −200 | 1.08 |

EP 3 418 512 B1

# FIG. 5

# FIG. 6

（ａ）

| PT 1000 |
| ST 1000 |

（ｂ）

| PT 1000 |
| ST 800 |

（ｃ）

| PT 800 |
| ST 1000 |

# FIG. 7

| | STATE | THRESHOLD VALUE FOR DETERMINATION | STEAM TURBINE SPEED GOVERNING VALVE OPENING DEGREE | DEVIATION FROM THRESHOLD VALUE | POWER TURBINE CONTROL VALVE OPERATION RATE |
|---|---|---|---|---|---|
| 1 | ABOVE-TARGET OPENING DEGREE STATE (DEEP) | STEAM TURBINE SPEED GOVERNING VALVE OPENING DEGREE > 85 | 95 | 10 | 10 |
| 2 | ABOVE-TARGET OPENING DEGREE STATE (SLIGHT) | STEAM TURBINE SPEED GOVERNING VALVE OPENING DEGREE > 85 | 87 | 2 | 2 |
| 3 | TARGET OPENING DEGREE STATE | 75 ≤ STEAM TURBINE SPEED GOVERNING VALVE OPENING DEGREE ≤ 85 | 80 | 0 | 0 |
| 4 | BELOW-TARGET OPENING DEGREE STATE (SLIGHT) | STEAM TURBINE SPEED GOVERNING VALVE OPENING DEGREE < 75 | 73 | 2 | 2 |
| 5 | BELOW-TARGET OPENING DEGREE STATE (DEEP) | STEAM TURBINE SPEED GOVERNING VALVE OPENING DEGREE < 75 | 65 | 10 | 10 |

EP 3 418 512 B1

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011027053 A
- JP 2011074866 A

- EP 2963253 A1